# FASCICULE DE BREVET EUROPEEN

(11) **EP 1 467 454 B1**
(45) Date de publication et mention de la délivrance du brevet: **20.02.2008**
(21) Numéro de dépôt: 04290925.9
(22) Date de dépôt: 07.04.2004
(51) Int. Cl.: H02G 3/08, H02G 3/12

(54) **Boîte électrique pour cloison sèche**
Elektroinstallationskasten für eine Trockenwand
Electrical box for a drywall

(30) Priorité: 11.04.2003 FR 0304549
(43) Date de publication de la demande: 13.10.2004
(73) Titulaire: LEGRAND FRANCE, 87000 Limoges (FR); LEGRAND SNC, 87000 Limoges (FR)
(72) Inventeur: Favalessa, Thierry, 87240 Ambazac (FR)
(74) Mandataire: Santarelli

(56) Documents cités:
- DE-A- 2 802 893
- FR-A- 2 773 919
- US-A- 4 957 803
- US-B1- 6 521 833

## Description

La présente invention concerne de manière générale les boîtes électriques à encastrer, destinées à recevoir des câbles et/ou des conducteurs électriques.

De telles boîtes sont notamment des boîtes pour appareillages électriques, des boîtes de dérivation de câbles et/ou de conducteurs électriques et des boîtes formant tableaux d'abonnés.

Il est déjà connu, par exemple du document FR-A- 2 773 919, de munir une telle boîte d'une ouverture destinée à accueillir l'extrémité coupée d'une gaine de câblage.

L'invention trouve une application particulièrement avantageuse dans la réalisation d'une boîte électrique à encastrer dans une cloison sèche, telle qu'une cloison alvéolaire.

Elle concerne en particulier une boîte électrique d'axe X comprenant une paroi rigide pourvue localement d'au moins une ouverture destinée à accueillir l'extrémité coupée d'une gaine de transport de câbles et/ou de conducteurs électriques.

Actuellement, dans les boîtes électriques connues, les ouvertures sont réalisées par défoncement d'une partie de la paroi rigide desdites boîtes. Chacune de ces ouvertures présente un diamètre supérieur au diamètre de la gaine à rapporter dans celle-ci de manière à autoriser la gaine à prendre différentes positions, notamment une première position dans laquelle elle s'étend sensiblement parallèlement à l'axe X de la boîte électrique concernée pour la mise en place de la boîte électrique dans la cloison sèche correspondante, et une deuxième position dans laquelle elle s'étend sensiblement perpendiculairement à l'axe X de la boîte électrique concernée lorsque ladite boîte électrique est en position définitive dans la cloison sèche correspondante.

Toutefois, de telles boîtes électriques connues n'assurent pas une étanchéité à l'air froid ou à la poussière du fait qu'il existe un jour important entre le bord de chaque ouverture et la face externe de la gaine rapportée dans celle-ci.

Par rapport à l'état de la technique précité, la présente invention propose une nouvelle boîte électrique à encastrer qui comprend, dans sa paroi rigide, un aménagement apte à accueillir, de manière étanche à l'air froid ou à la poussière, l'extrémité coupée d'une gaine de transport de câbles et/ou de conducteurs électriques et à autoriser cette gaine à pivoter d'un angle d'environ 90° pour permettre la mise en place aisée de la boîte électrique dans la paroi considérée.

Plus particulièrement, l'invention propose une boîte électrique, telle que définie en introduction, caractérisée en ce qu'elle comporte, d'une part, un manchon cylindrique d'axe X1 qui définit intérieurement ladite ouverture, et, d'autre part, une paroi souple qui lie ledit manchon cylindrique à ladite paroi rigide, cette paroi souple comportant une zone à soufflets apte à se déformer pour autoriser ledit manchon cylindrique à pivoter autour d'un point situé sur son axe X1, entre deux positions, à savoir une première position dans laquelle l'axe X1 dudit manchon cylindrique est sensiblement parallèle à l'axe X de la boîte électrique et une deuxième position dans laquelle l'axe X1 dudit manchon cylindrique est sensiblement perpendiculaire à l'axe X.

D'autres caractéristiques non limitatives et avantageuses de la boîte électrique selon l'invention sont les suivantes :
- ladite paroi souple comporte une zone dite d'enroulement qui établit la jonction entre le manchon cylindrique et la zone à soufflets et où ladite paroi souple se replie sur elle-même lorsque ledit manchon cylindrique prend une desdites première et deuxième positions ;
- ladite paroi souple comporte deux zones dites d'enroulement, une première zone dite d'enroulement située d'un côté de l'axe X1 du manchon cylindrique positionné dans ladite première position, et une deuxième zone dite d'enroulement placée de l'autre côté de l'axe X1 du manchon cylindrique positionné dans ladite deuxième position, les deux zones dites d'enroulement étant symétriques par rapport à l'axe X1 du manchon cylindrique ;
- le manchon cylindrique comporte sur sa face interne des moyens d'accrochage de ladite gaine ;
- lesdits moyens d'accrochage comprennent au moins une dent apte à s'engager dans une rainure de ladite gaine annelée.
- lesdits moyens d'accrochage comportent deux dents positionnées symétriquement par rapport à l'axe X1 du manchon cylindrique et aptes à s'engager dans une rainure de la gaine annelée ;
- lesdits moyens d'accrochage comprennent une nervure annulaire apte à s'engager dans une rainure de la gaine annelée ;
- ledit manchon cylindrique comporte un diamètre interne égal au jeu près au diamètre externe de ladite gaine ;
- ledit manchon cylindrique et ladite paroi souple forment une seule pièce réalisée en une seule matière plastique ;
- ledit manchon cylindrique, ladite paroi souple et la paroi rigide de la boîte électrique sont réalisés d'une seule pièce par moulage d'une matière plastique unique ; et
- ledit manchon cylindrique et ladite paroi souple d'une part, et la paroi rigide de la boîte électrique d'autre part, sont réalisés dans deux matières plastiques différentes, ledit manchon cylindrique et ladite paroi souple étant surmoulés sur ladite paroi rigide.

La description qui va suivre, en regard des dessins annexés donnés à titre d'exemples non limitatifs, fera bien comprendre en quoi consiste l'invention et comment elle peut être réalisée.

Sur les dessins annexés :
- la figure 1 est une vue partielle en perspective d'une boîte électrique selon l'invention ;
- la figure 2 est une vue partielle en coupe transversale de la boîte électrique de la figure 1 sur laquelle est rapportée une gaine d'amenée de câbles et/ou de conducteurs électriques positionnée selon sa première position ;
- la figure 3 est une vue équivalente à celle de la figure 2 sur laquelle la gaine est positionnée selon une position intermédiaire ;
- la figure 4 est une vue équivalente à celle de la figure 2 dans laquelle la gaine est positionnée selon sa deuxième position ;
- la figure 5 est une vue de côté de la boîte électrique selon l'invention lors de sa mise en place dans une cloison sèche ; et
- la figure 6 est une vue de côté de la boîte d'encastrement de la figure 5 en position définitive dans la cloison sèche considérée.

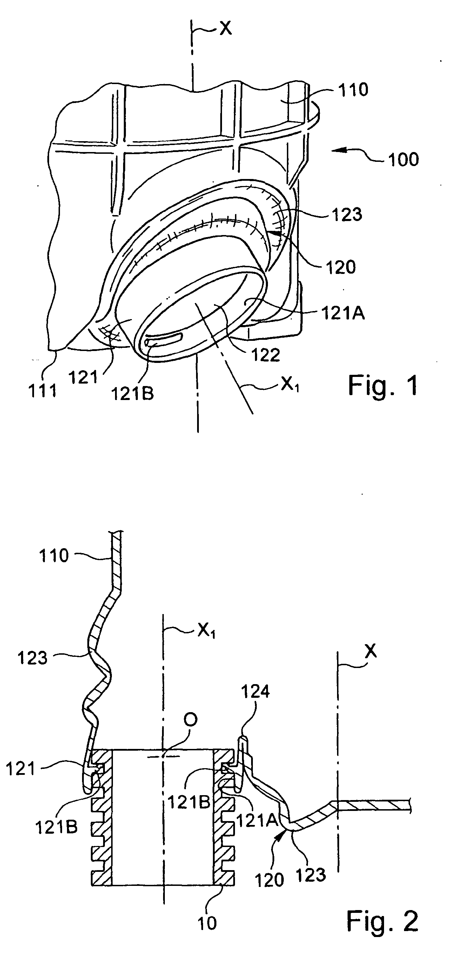

Sur les figures 1 à 6 on a représenté une boîte électrique 100 d'axe X à encastrer, ici une boîte d'encastrement d'un appareillage électrique, destinée à recevoir non seulement l'appareillage électrique en question non représenté, mais aussi les câbles et/ou les conducteurs électriques nécessaires à son alimentation.

Cette boîte électrique 100 est avantageusement destinée à être encastrée dans une cloison sèche (non représentée) du type cloison alvéolaire.

Elle comprend une paroi rigide 110 qui forme une paroi latérale sensiblement cylindrique de révolution autour de l'axe X et un fond 111. A l'opposé du fond 111, la boîte électrique 100 comporte une ouverture circulaire 112 permettant l'introduction de l'appareillage électrique dans ladite boîte électrique 100.

La paroi rigide 110 de la boîte électrique 100 est pourvue localement de deux ouvertures 122 disposées symétriquement par rapport à l'axe X et destinées chacune à accueillir l'extrémité coupée d'une gaine 10 de transport de câbles et/ou de conducteurs électriques pour permettre l'entrée dans la boîte électrique des câbles et/ou des conducteurs nécessaires à la desserte de l'appareillage électrique correspondant.

Bien entendu, selon une variante non représentée, on peut prévoir que la boîte électrique selon l'invention comporte dans sa paroi rigide une seule ouverture d'entrée de câbles et/ou de conducteurs électriques.

Comme le montrent plus particulièrement les figures 1 à 4, avantageusement selon l'invention, la boîte électrique 100 comporte, d'une part, un manchon cylindrique 121 d'axe X1 qui définit intérieurement l'ouverture 122 correspondante, et, d'autre part, une paroi souple 120 qui entoure le manchon cylindrique 121 et qui lie celui-ci à la paroi rigide 110. Cette paroi souple 120 comporte une zone à soufflets 123.

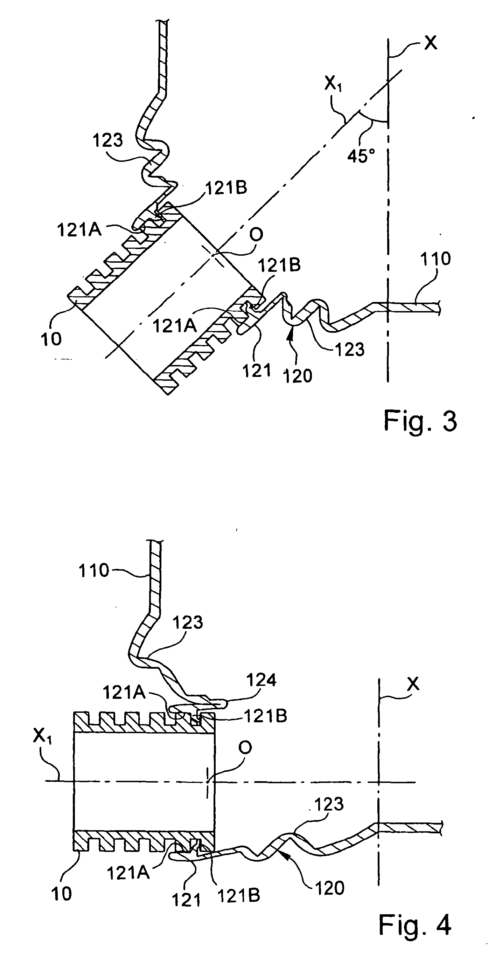

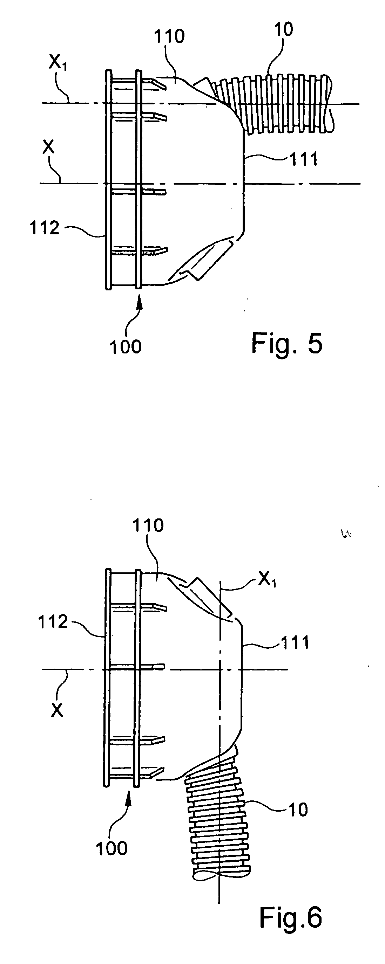

Comme le montrent plus particulièrement les figures 2, 3 et 4, la zone à soufflets 123 de la paroi souple 120 est apte à se déformer pour autoriser le manchon cylindrique 121 à pivoter autour d'un point O situé sur son axe X1, entre deux positions, à savoir une première position, représentée sur les figures 2 et 5, dans laquelle l'axe X1 du manchon cylindrique 121 est sensiblement parallèle à l'axe X de la boîte électrique 100 et une deuxième position, représentée sur les figures 4 et 6, dans laquelle l'axe X1 du manchon cylindrique 121 est sensiblement perpendiculaire à l'axe X.

Comme le montrent les figures 2 et 4, dans les première et deuxième positions du manchon cylindrique 121, les soufflets de la zone à soufflets 123 de la paroi souple 120 sont ouverts. Entre les première et deuxième positions, le manchon cylindrique 121 passe par une position intermédiaire, représentée sur la figure 3, dans laquelle son axe X1 s'étend à 45° par rapport à l'axe X de la boîte électrique 100. Dans cette position intermédiaire, les soufflets de la zone à soufflets 123 de la paroi souple 120 sont fermés.

En outre, avantageusement, la paroi souple 120 comporte une zone dite d'enroulement 124 qui établit la jonction entre le manchon cylindrique 121 et la zone à soufflets 123 de la paroi souple 120 et où ladite paroi souple 120 se replie sur elle-même lorsque ledit manchon cylindrique 121 prend une desdites première et deuxième positions.

Comme le montrent les figures 2 et 4, la paroi souple 120 comporte deux zones dites d'enroulement 124, une première zone dite d'enroulement 124 située d'un côté de l'axe X1 du manchon cylindrique 121 positionné dans ladite première position, et une deuxième zone dite d'enroulement 124 placée de l'autre côté de l'axe X1 du manchon cylindrique 121 positionné dans ladite deuxième position, les deux zones dites d'enroulement 124 étant symétriques par rapport à l'axe X1 du manchon cylindrique 121.

Bien entendu, pour chacune des première et deuxième positions du manchon cylindrique 121, la paroi souple 120 présente une seule zone dite d'enroulement 124 là où la paroi souple 120 se replie ou "s'enroule" sur elle-même.

Par ailleurs, le manchon cylindrique 121 comporte sur sa face interne 121A délimitant l'ouverture 122 des moyens d'accrochage 121B de la gaine 10.

Avantageusement, le diamètre interne du manchon cylindrique 121 est égal au jeu près au diamètre externe de la gaine 10 de sorte que, lorsque l'extrémité coupée de la gaine 10 est rapportée dans l'ouverture 122, la face interne 121A du manchon cylindrique 121 s'applique contre la face externe de la gaine 10 pour établir une étanchéité entre l'intérieur et l'extérieur de la boîte électrique 100, notamment une étanchéité à l'air froid et/ou à la poussière.

Les moyens d'accrochage prévus sur la face interne 121A du manchon cylindrique 121 comprennent ici deux dents 121B disposées symétriquement par rapport à l'axe X1 du manchon cylindrique 121 et s'engageant dans une rainure prévue sur la face externe de la gaine 10 annelée.

Bien entendu, selon un autre mode de réalisation non représenté, on pourrait prévoir une seule dent ou encore une nervure annulaire apte à s'engager dans une rainure de la gaine annelée.

Avantageusement, également, le manchon cylindrique 121 et la paroi souple 120 forment une seule pièce réalisée en une seule matière plastique moulée.

Selon un mode de réalisation, on pourrait prévoir que le manchon cylindrique 121, la paroi souple 120 et la paroi rigide 110 de la boîte électrique 100 soient réalisés d'une seule pièce par moulage d'une matière plastique unique, telle que par exemple du polypropylène auto-extinguible ou du polyéthylène haute-pression.

Selon une variante de réalisation, on pourrait prévoir également que le manchon cylindrique 121 et la paroi souple 120 d'une part, et la paroi rigide 110 de la boîte électrique 100 d'autre part, soient réalisés dans deux matières plastiques différentes.

Dans ce cas, le manchon cylindrique 121 et la paroi souple 120 sont surmoulés sur la paroi rigide 110. Le manchon cylindrique 121 et la paroi souple 120 peuvent être réalisés en SEBS (styrène éthylène butylène-styrène) qui est une matière plastique souple alors que la matière de la paroi rigide 110 du manchon cylindrique 120 peut être du polypropylène ou du polyéthylène haute pression.

Avantageusement, la boîte électrique 100 permet de rapporter une extrémité d'une gaine 10 de transport de câbles et/ou de conducteurs électriques en autorisant un mouvement de pivotement de la gaine 10 d'une amplitude de 90° tout en assurant au niveau de l'entrée de la gaine dans la boîte électrique une étanchéité à l'air et/ou à la poussière.

Ainsi, lors de la mise en place de la boîte électrique 100 dans la cloison sèche, l'installateur peut amener chaque gaine 10 dans chaque ouverture 122 de la boîte électrique 100 de telle manière que ladite gaine 10 s'étende selon l'axe X1 du manchon cylindrique 121 parallèlement à l'axe X de la boîte électrique 100, comme représenté sur la figure 5, puis il peut faire pivoter la gaine 10 de 90° grâce à la rotation du manchon cylindrique 121 autorisée par la paroi souple 120 de façon à mettre en position définitive la boîte électrique 100 dans la cloison sèche, comme représenté sur la figure 6.

La présente invention n'est nullement limitée aux modes de réalisation décrits et représentés, mais l'homme du métier saura y apporter toute variante dans le cadre des revendications ci-après.

## Revendications

1. Boîte électrique (100) d'axe X à encastrer, destinée à recevoir des câbles et/ou des conducteurs électriques, comprenant une paroi rigide (110) pourvue localement d'au moins une ouverture (122) destinée à accueillir l'extrémité coupée d'une gaine (10) de transport de câbles et/ou de conducteurs électriques, ladite boîte étant adaptée à permettre à ladite gaine de prendre une première position dans laquelle elle s'étend sensiblement parallèlement à l'axe X pour la mise en place de ladite boîte dans une cloison, et une deuxième position dans laquelle elle s'étend sensiblement perpendiculairement à l'axe X lorsque ladite boîte est en position définitive dans ladite cloison, **caractérisée en ce qu'**elle comporte, d'une part, un manchon cylindrique (121) d'axe X1 qui définit intérieurement ladite ouverture (122), et, d'autre part, une paroi souple (120) qui lie ledit manchon cylindrique (121) à ladite paroi rigide (110), cette paroi souple (120) comportant une zone à soufflets (123) apte à se déformer pour autoriser ledit manchon cylindrique (121) à pivoter autour d'un point (O) situé sur son axe X1, entre deux positions, à savoir une première position dans laquelle l'axe X1 dudit manchon cylindrique (121) est sensiblement parallèle à l'axe X de la boîte électrique (100) et une deuxième position dans laquelle l'axe X1 dudit manchon cylindrique (121) est sensiblement perpendiculaire à l'axe X.

2. Boîte électrique (100) selon la revendication 1, **caractérisée en ce que** ladite paroi souple (120) comporte une zone dite d'enroulement (124) qui établit la jonction entre le manchon cylindrique (121) et la zone à soufflets (123) et où ladite paroi souple (120) se replie sur elle-même lorsque ledit manchon cylindrique (121) prend une desdites première et deuxième positions.

3. Boîte électrique (100) selon la revendication 2, **caractérisée en ce que** ladite paroi souple (120) comporte deux zones dites d'enroulement (124), une première zone dite d'enroulement (124) située d'un côté de l'axe X1 du manchon cylindrique (121) positionné dans ladite première position, et une deuxième zone dite d'enroulement (124) placée de l'autre côté de l'axe X1 du manchon cylindrique (121) positionné dans ladite deuxième position, les deux zones dites d'enroulement (124) étant symétriques par rapport à l'axe X1 du manchon cylindrique (121).

4. Boîte électrique (100) selon l'une des revendications 1 à 3, **caractérisée en ce que** le manchon cylindrique (121) comporte sur sa face interne (121A) des moyens d'accrochage (121B) de ladite gaine (10).

5. Boîte électrique (100) selon la revendication 4, **caractérisée en ce que** lesdits moyens d'accrochage comprennent au moins une dent (121B) apte à s'engager dans une rainure de ladite gaine (10) annelée.

6. Boîte électrique (100) selon l'une des revendications 4 ou 5, **caractérisée en ce que** lesdits moyens d'accrochage comportent deux dents (121B) positionnées symétriquement par rapport à l'axe X1 du manchon cylindrique (121) et aptes à s'engager dans une rainure de la gaine (10) annelée.

7. Boîte électrique selon la revendication 4, **caractérisée en ce que** lesdits moyens d'accrochage comprennent une nervure annulaire apte à s'engager dans une rainure de la gaine annelée.

8. Boîte électrique (100) selon l'une des revendications 1 à 7, **caractérisée en ce que** ledit manchon cylindrique (121) comporte un diamètre interne égal au jeu près au diamètre externe de ladite gaine (10).

9. Boîte électrique (100) selon d'une des revendications 1 à 8, **caractérisée en ce que** ledit manchon cylindrique (121) et ladite paroi souple (120) forment une seule pièce réalisée en une seule matière plastique.

10. Boîte électrique (100) selon la revendication 9, **caractérisée en ce que** ledit manchon cylindrique (121), ladite paroi souple (120) et la paroi rigide (110) de la boîte électrique (100) sont réalisées d'une seule pièce par moulage d'une matière plastique unique.

11. Boîte électrique (100) selon la revendication 9, **caractérisée en ce que** ledit manchon cylindrique (121) et ladite paroi souple (120) d'une part, et la paroi rigide (110) de la boîte électrique (100) d'autre part, sont réalisés dans deux matières plastiques différentes, ledit manchon cylindrique (121) et ladite paroi souple (120) étant surmoulés sur ladite paroi rigide (110).

## Claims

1. An electrical box (100) having an axis X for embedded mounting, adapted to receive electrical conductors and/or cables, comprising a rigid wall (110) locally provided with at least one opening (122) adapted to receive the cut end of a sheath (10) for the transport of electrical conductors and/or cables, said box being adapted to allow said sheath to adopt a first position in which it extends substantially parallel to the axis X for installing said box in a partition, and a second position in which it extends substantially perpendicularly to the axis X when said box is in final position in said partition, **characterized in that** it comprises a cylindrical sleeve (121) having an axis X1 which internally defines said opening (122), and comprises a flexible wall (120) which binds said cylindrical sleeve (121) to said rigid wall (110), said flexible wall (120) comprising a zone with bellows (123) adapted to deform to permit said cylindrical sleeve (121) to pivot about a point (0) situated on its axis X1, between two positions, that is to say a first position in which the axis X1 of said cylindrical sleeve (121) is substantially parallel to the axis X of the electrical box (100) and a second position in which the axis X1 of said cylindrical sleeve (121) is substantially perpendicular to the axis X.

2. An electrical box (100) according to claim 1, **characterized in that** said flexible wall (120) comprises a so-called roll-up zone (124) which forms the junction between the cylindrical sleeve (121) and the bellows zone (123) and wherein said flexible wall (120) folds onto itself when said cylindrical sleeve (121) assumes one of said first and second positions.

3. An electrical box (100) according to claim 2, **characterized in that** said flexible wall (120) comprises two so-called roll-up zones (124), a first so-called roll-up zone (124) situated on one side of the axis X1 of the cylindrical sleeve (121) positioned in said first position, and a second so-called roll-up zone (124) placed on the other side of the axis X1 of the cylindrical sleeve (121) positioned in said second position, the two so-called roll-up zones (124) being symmetrical relative to the axis X1 of the cylindrical sleeve (121).

4. An electrical box (100) according to one of claims 1 to 3, **characterized in that** the cylindrical sleeve (121) comprises on its inside face (121A) means (121B) for snagging said sheath (10).

5. An electrical box (100) according to claim 4, **characterized in that** said snagging means comprise at least one tooth (121B) adapted to engage in a groove of said sheath (10) having annular corrugations.

6. An electrical box (100) according to one of claims 4 or 5, **characterized in that** said snagging means comprise two teeth (121B) symmetrically positioned relative to the axis X1 of the cylindrical sleeve (121) and adapted to engage in a groove of the sheath (10) having annular corrugations.

7. An electrical box according to claim 4, **characterized in that** said snagging means comprise an annular rib adapted to engage in a groove of the sheath having annular corrugations.

8. An electrical box (100) according to one of claims 1 to 7, **characterized in that** said cylindrical sleeve (121) comprises an internal diameter which, discounting clearance, is equal to the outer diameter of said sheath (10).

9. An electrical box (100) according to one of claims 1 to 8, **characterized in that** said cylindrical sleeve (121) and said flexible wall (120) form a single piece produced from a single plastics material.

10. An electrical box (100) according to claim 9, **characterized in that** said cylindrical sleeve (121), said flexible wall (120) and the rigid wall (110) of the electrical box (100) are formed as a single piece by molding from only one plastics material.

11. An electrical box (100) according to claim 9, **characterized in that** said cylindrical sleeve (121) and said flexible wall (120) on the one hand, and the rigid wall (110) of the electrical box (100) on the other hand, are formed from two different plastics materials, said cylindrical sleeve (121) and said flexible wall (120) being molded onto said rigid wall (110).

## Patentansprüche

1. Einbaubarer Elektroinstallationskasten (100) mit einer Achse X, der dazu bestimmt ist, Kabel und/oder elektrische Leitungen aufzunehmen, mit einer starren Wand (110), die stellenweise mit wenigstens einer Öffnung (122) versehen ist, die zur Aufnahme des abgeschnittenen Endes eines Schlauchs (10) zum Kabel- und/oder Leitungstransport bestimmt ist, wobei der Kasten so ausgeführt ist, dass der Schlauch eine ersten Position, in der er zum Anbringen des Kastens in einer Wand im Wesentlichen parallel zur Achse X verläuft, und eine zweite Position, in der er im Wesentlichen lotrecht zur Achse X verläuft, wenn sich der Kasten in der Wand in der Endstellung befindet, einnehmen kann,
**dadurch gekennzeichnet, dass** er einerseits einen zylindrischen Stutzen (121) mit einer Achse X1, die innen die Öffnung (122) definiert, und andererseits eine elastische Wand (120), welche den zylindrischen Stutzen (121) mit der starren Wand (110) verbindet, umfasst, wobei die elastische Wand (120) einen Faltenbalgbereich (123) aufweist, der sich zu verformen vermag, um dem zylindrischen Stutzen (121) ein Schwenken um einen Punkt (O) zu gestatten, der auf dessen Achse X1 zwischen zwei Positionen liegt, nämlich einer ersten Position, in der die Achse X1 des zylindrischen Stutzens (121) zur Achse X des Elektroinstallationskastens (100) im Wesentlichen parallel ist, und einer zweiten Position, in der die Achse X1 des zylindrischen Stutzens (121) zur Achse X im Wesentlichen lotrecht ist.

2. Elektroinstallationskasten (100) nach Anspruch 1,
**dadurch gekennzeichnet, dass** die elastische Wand (120) einen so genannten Einrollbereich (124) aufweist, der die Verbindung zwischen dem zylindrischen Stutzen (121) und dem Faltenbalgbereich (123) herstellt und in dem sich die elastische Wand (120) zusammenfaltet, wenn der zylindrische Stutzen (121) eine erste oder zweite Position einnimmt.

3. Elektroinstallationskasten (100) nach Anspruch 2,
**dadurch gekennzeichnet, dass** die elastische Wand (120) zwei so genannte Einrollbereiche (124) aufweist, nämlich einen ersten so genannten Einrollbereich (124), der auf einer Seite der Achse X1 des in der ersten Position befindlichen zylindrischen Stutzens (121) liegt, und einen zweiten so genannten Einrollbereich (124), der auf der anderen Seite der Achse X1 des in der zweiten Position befindlichen zylindrischen Stutzens (121) angeordnet ist, wobei beide so genannte Einrollbereiche (124) bezüglich der Achse X1 des zylindrischen Stutzens (121) symmetrisch sind.

4. Elektroinstallationskasten (100) nach einem der Ansprüche 1 bis 3,
**dadurch gekennzeichnet, dass** der zylindrische Stutzen (121) auf seiner Innenseite (121A) Mittel (121B) zum Einhaken des Schlauchs (10) aufweist.

5. Elektroinstallatlonskasten (100) nach Anspruch 4,
**dadurch gekennzeichnet, dass** die Verhakungsmittel wenigstens einen Zahn (121B) aufweisen, der in eine Rille des Spiralschlauchs (10) einzugreifen vermag.

6. Elektroinstallationskasten (100) nach einem der Ansprüche 4 oder 5,
**dadurch gekennzeichnet, dass** die Verhakungsmittel zwei Zähne (121B) aufweisen, die bezüglich der Achse X1 des zylindrischen Stutzens (121) symmetrisch angeordnet sind und in eine Rille des Spiralschlauchs (10) einzugreifen vermögen.

7. Elektroinstallationskasten (100) nach Anspruch 4,
**dadurch gekennzeichnet, dass** die Verhakungsmittel eine ringförmige Rippe aufweisen, die in eine Rille des Spiralschlauchs einzugreifen vermag.

8. Elektroinstallationskasten (100) nach einem der Ansprüche 1 bis 7,
**dadurch gekennzeichnet, dass** der zylindrische Stutzen (121) einen Innendurchmesser aufweist, der dem Außendurchmesser des Schlauchs (10) auf das Spiel genau entspricht.

9. Elektroinstallationskasten (100) nach einem der Ansprüche 1 bis 8,
**dadurch gekennzeichnet, dass** der zylindrische Stutzen (121) und die elastische Wand (120) ein einziges Stück bilden, das aus ein und demselben Kunststoff ausgeführt ist.

10. Elektroinstallationskasten (100) nach Anspruch 9,
**dadurch gekennzeichnet, dass** der zylindrische Stutzen (121), die elastische Wand (120) und die starre Wand (110) des Elektroinstallationskastens (100) aus einem Stück durch Formgießen eines einzigen Kunststoffs ausgeführt sind.

11. Elektrolnstallationskasten (100) nach Anspruch 9,
**dadurch gekennzeichnet, dass** der zylindrische Stutzen (121) und die elastische Wand (120) einerseits, und die starre Wand (110) des Elektroinstallationskastens (100) andererseits aus zwei verschiedenen Kunststoffen ausgeführt sind, wobei der zylindrische Stutzen (121) und die elastische Wand (120) auf die starre Wand (110) aufgespritzt sind.
